# EUROPEAN PATENT APPLICATION

(11) **EP 1 205 375 A1**
(43) Date of publication of application: **15.05.2002**
(21) Application number: 01204244.6
(22) Date of filing: 06.11.2001
(51) Int. Cl.: B62D 13/02, B62D 53/00

(54) **A vehicle comprising a chassis fitted with a first pair of wheels and a second pair of wheels**

(30) Priority: 09.11.2000 NL 1016576
(71) Applicant: Transport Industry Development Centre B.V., 5692 GA Son en Breugel (NL)
(72) Inventor: van Brussel, Antonius Petrus Jozef Marianus, 5421 WD Gemert (NL)
(74) Representative: Dorna, Peter

(57) **Abstract**

The invention relates to a vehicle (1) comprising a chassis (2) fitted with a first pair of wheels (3a,3b) and a second pair of wheels (4a,4b), which are rotatably journalled in, respectively, a first wheel pair frame (7) and a second wheel pair frame (8), which are each rotatably connected to the chassis (2) on two opposed sides of the chassis (2) about a first vertical axis (24) and a second vertical axis (25), respectively, and which are interconnected by a transmission for transmitting a rotation of the first wheel pair frame (7) to the second wheel pair frame (8) according to a first transmission ratio, wherein the second wheel pair frame (8) includes a second sliding member (12), which is movable with respect to the second wheel pair frame (8) in dependence on the rotation of the first wheel pair frame (7), which movement influences the first transmission ratio.

## Description

The invention relates to a vehicle comprising a chassis fitted with a first pair of wheels and a second pair of wheels, which are rotatably journalled in, respectively, a first wheel pair frame and a second wheel pair frame, which are each rotatably connected to the chassis on two opposed sides of the chassis about a first vertical axis and a second vertical axis, respectively, and which are interconnected by a transmission for transmitting a rotation of the first wheel pair frame to the second wheel pair frame according to a first transmission ratio.

Such vehicles, which are known, are for example used in a so-called train formation, in which a number of such vehicles are coupled together and this train of vehicles is pulled by a tractive vehicle at the head of the train formation. The aforesaid transmission as used with such vehicles functions to convert rotation of the front, steering wheel pair frame into rotation in opposite direction of the rear wheel pair frame being steered, so that both the front and the rear pair of wheels contribute to a steering manoeuvre of the vehicle, as a result of which the vehicles follow each other's track to a greater or lesser extent. The steering characteristic indicates the extent to which the rear pair of wheels rotates in dependence on the rotation of the front pair of wheels, this steering characteristic can readily be represented in a diagram.

The object of the invention is to provide, whether or not in a preferred embodiment thereof, a vehicle having a steering characteristic which in principle allows a greater design flexibility. More in particular it is an object of the invention to provide a vehicle having a steering characteristic wherein rotation in a first part of the range of movement of the first wheel pair frame causes a rotation of the second wheel pair frame of the same magnitude, albeit in opposite direction, whilst the second wheel pair frame hardly rotates, if at all, in a second part of the range of movement of the first wheel pair frame. In this manner, successive vehicles of a train formation will keep following each other's track in said first part of the range of movement, whilst the rear pair of wheels of individual vehicles will follow the track of the first pair of wheels, which enables more accurate steering. The second part of the range of movement is in particular important in the case of a rotation of the first wheel pair frame of 70° or more, since the vehicle would run the risk of tilting if the second wheel pair frame would rotate through the same absolute angle of displacement. Experience shows that a maximum angle of displacement of the first wheel pair frame of about 40° is used during normal forward movement of such vehicles. In special situations, however, for example in the case of extremely sharp turns or when extra vehicles are hitched on, there is a chance of such an angle of displacement of the first wheel pair frame being exceeded. The vehicle according to the invention is characterized in that the second wheel pair frame includes a second sliding member, which is movable with respect to the second wheel pair frame in dependence on the rotation of the first wheel pair frame, which movement influences the first transmission ratio. It is noted that the term "second" in "second sliding member" indicates that the sliding member in question forms part of the second wheel pair frame. The use of such a movable sliding member introduces an additional constructional degree of freedom, which results in a greater variety as regards the creation of the desired steering characteristic.

Preferably, the transmission comprises a steering rod, whose respective ends act on the first wheel pair frame and the second wheel pair frame, respectively, at a first radial distance from the first vertical axis and at a second radial distance from the second vertical axis, wherein movement of the second sliding member effects a change in first radial distance and/or said second radial distance.

Preferably, a transmission arm is provided, which transmission arm is pivotally connected to the second wheel pair frame about a vertical transmission axis and which is coupled to the second sliding member and to the steering rod. The use of such a transmission arm makes it possible to influence the first transmission ratio in an efficient manner, for example because the second radial distance changes during rotation of the first wheel pair frame as a result of the action of the transmission arm.

Preferably, a coupling is provided between the first wheel pair frame and the second sliding member, which coupling acts on the first wheel pair frame at a first coupling distance from the first vertical axis. Said coupling, which works eccentrically on account of the first coupling distance, which is by definition different from zero, rotation of the first wheel pair frame will have pulling or pushing effect on the second sliding member. Alternatively, it is also possible to steer the second sliding member hydraulically, for example, in dependence on the rotation of the first wheel pair frame.

According to one preferred embodiment, said coupling acts on the second wheel pair frame at a second coupling distance from the second vertical axis. Also in this case, the second coupling distance is different from zero, as a result of which the coupling acts eccentrically on the second wheel pair frame. Such action of the coupling on the first and the second wheel pair frame also enables a switch of functions between the first wheel pair frame and the second wheel pair frame, wherein the first coupling distance and the second coupling distance may vary in dependence on the angular displacements of the wheel pair frames.

According to a very special preferred embodiment, the vehicle according to the invention is characterized in that said transmission is also arranged for transmitting rotation of the second wheel pair frame to the first wheel pair frame according to a second transmission ratio, and in that the first wheel pair frame includes a first sliding member, which is movable with respect to the first wheel pair frame in dependence on rotation of the second wheel pair frame, which movement of the first sliding frame influences the second transmission ratio. A major advantage of such an embodiment of a vehicle according to the invention is that the vehicles in question can be driven in two opposed directions. In this connection a situation can be imagined wherein a train of vehicles follow a relatively narrow path, for example in a factory building, in each other's track. Upon arrival at the destination, the tractive vehicle unhitches at the front side and hitches to the front side of the vehicle that was first the last vehicle of the train so as to move the train of vehicles along the same path again, but this time in the opposite, reverse direction. A major advantage of this arrangement is that the train of vehicles need not be turned, which would require a great deal of space. It is noted that the first transmission ratio and the second transmission ratio may be identical to each other.

Preferably, locking means are preferably provided in connection with the reversal of the direction of movement, which locking means effect a rigid connection between the first wheel pair frame and the first sliding member or between the second wheel pair frame and the second sliding member. It is essential that only the sliding frame of one of the two wheel pair frames be locked in position, namely the first wheel pair frame, which has a steering function, whilst the rear wheel pair frame, which has a steered function in that case, is not locked in position, so that the rear sliding frame in question can move with respect to the rear wheel pair frame.

Preferably, a vehicle according to the invention is characterized in that a first coupling element, which is rigidly connected to the first wheel pair frame, at least in the horizontal plane, and a connecting element being connected to the first wheel pair frame are provided for connecting the vehicle to another vehicle by also connecting the connecting element to a second wheel pair frame including a second coupling element of the other vehicle, and in that coupling means are provided for rigidly connecting, at least in the horizontal plane, to the first coupling element or the second coupling element. When such a vehicle is used, reversal of the direction of movement of a train formation of such vehicles, and thus of the functions of the two wheel pair frames, can take place in an efficient manner, wherein it can be ensured that the vehicles keep following each other's track independently of the direction of movement. Such a coupling between two vehicles, which may form part of a train formation, for example, is also quite suitable for use with vehicles other than those according to the invention, but wherein the functions of the two wheel pair frames are interchangeable. The presence of one or two sliding members is not required.

A very simple embodiment is obtained if the coupling means on the one hand and the first coupling element or the second coupling element on the other hand form a form-locked connection in the case of coupling co-operation.

Preferably, said first coupling element and said second coupling element are provided with a recess for coupling co-operation with a protrusion of said coupling means. Such a configuration has the advantage that if coupling co-operation is only possible when two successive vehicles are aligned, and such is not the case when the reversal of the direction of movement is started, the desired coupling co-operation will be effected yet as soon as the vehicles are actually positioned in line with each other.

Preferably, said coupling means are movable between a first extreme position for coupling co-operation with the first wheel pair frame of the vehicle and uncoupling from the second wheel pair frame of the other vehicle, and a second extreme position for uncoupling from the first wheel pair frame of the vehicle and coupling co-operation with the second wheel pair frame of the other vehicle. With such an embodiment, the risk of a coupling co-operation existing between the coupling means and both the first wheel pair frame of the vehicle and the second wheel pair frame of another vehicle is excluded.

The invention will now be explained in more detail by means of a description of a preferred embodiment of the invention, wherein reference will be made to the following figures.
Fig. 1 is a schematic top plan view of a vehicle according to the invention.
Fig. 2 is a schematic side elevation of Fig. 1.
Fig. 3 is a top plan view according to Fig. 1, albeit in an even more schematic form, wherein the kinematic model is more clearly expressed and wherein the middle part is not shown.
Fig. 4 shows the vehicle of Fig. 3 in top plan view during a first phase of taking a turn to the right.
Fig. 5 shows the vehicle during a further phase of taking a turn to the right.
Fig. 6 shows the vehicle according to Fig. 3 during a first phase of taking a turn to the left.
Fig. 7 shows a second phase of the vehicle taking a turn to the left.
Fig. 8 shows a number of vehicles according to the invention in a train formation.
Figs. 9A - 9C show a preferred embodiment of a link between two vehicles in a neutral position and in two opposite directions of travel.

Although all the drawings are schematic representations, it is noted by way of introduction that the dimensions, insofar as they are relevant for the kinematic model, are shown in the correct proportions relative to each other.

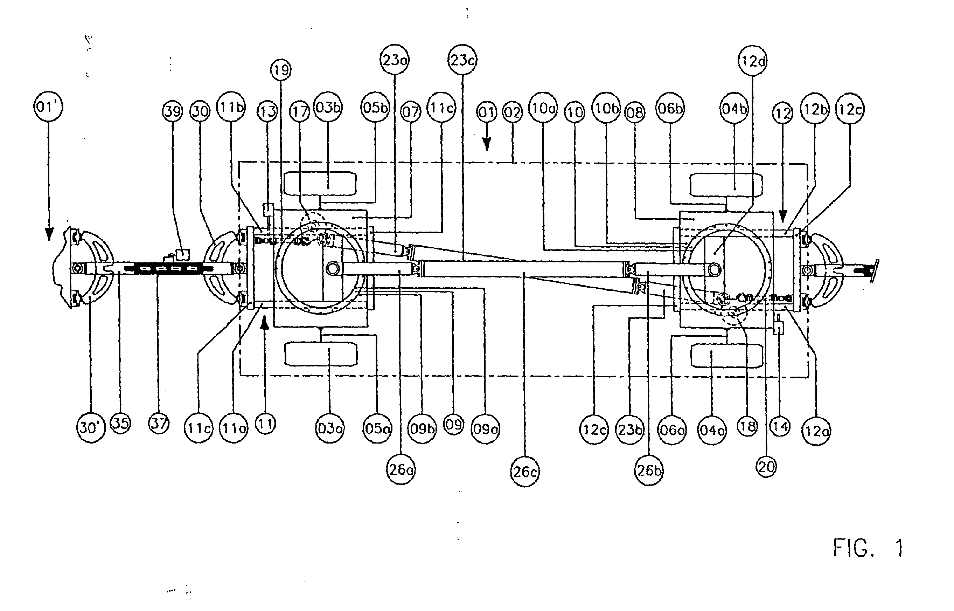

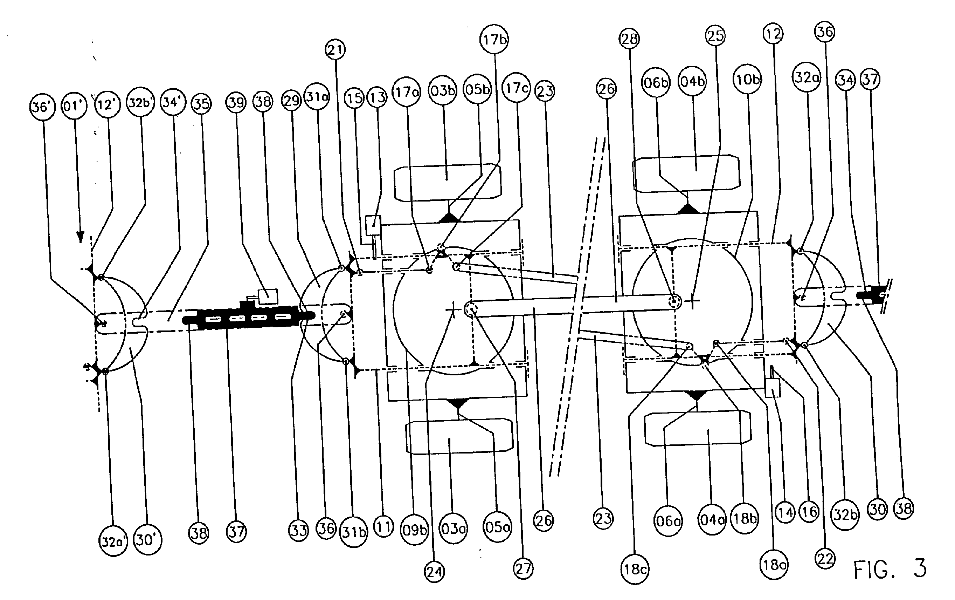

Figs. 1 and 3 schematically show in top plan view a vehicle 1 according to the invention in a neutral position thereof. Chassis 2 is illustrated in chain-dotted lines. Pairs of wheels 3a, 3b and 4a, 4b are rotatably journalled, via respective axle parts 5a, 5b and 6a, 6b in respective axle mounting frames 7 and 8 in the corners of the substantially rectangular chassis 2. Although the axle parts 5a, 5b are represented as separate axle parts in Fig. 1, it is also readily possible to design the axle parts 5a, 5b and 6a, 6b, respectively, as extended axles.

The axle mounting frames 7, 8 are mounted on chassis 2, via respective turntables 9, 10, in such a manner as to be rotatable about the respective axes 24, 25. Such turntables 9, 10 are known to those skilled in the art, they consist of a fixed disc 9a, 10a for rigid attachment to chassis 2 and a disc 9b, 10b which is rotatable relative to the fixed disc, which disc 9b, 10b is rigidly attached to the associated axle mounting frame 7, 8. One sliding frame 11, 12 is provided for each axle mounting frame 7, 8, which sliding frame is movable with respect to the axle mounting frame in question. In principle, said movement can take place in horizontal direction perpendicularly to the longitudinal direction of axle parts 5a, 5b and 6a, 6b. The sliding frames 11, 12 are substantially built up of two longitudinal beams 11a, 11b and 12a, 12b, respectively, and three cross beams 11c, 11d, 11e and 12c, 12c, 12e, respectively, which are interconnected in each axle mounting frame 7, 8.

A locking mechanism 13, 14 is rigidly connected to each axle mounting frame 7, 8 by means of telescopic pins 15, 16, which engage in a hole (not shown) in sliding frame 11, 12 in the extended position, thus preventing movement of the sliding frame 11, 12 with respect to the associated axle mounting frame 7, 8, which movement is possible in the telescoped position of the pins 15, 16.

Furthermore, a transmission element 17, 18 is provided for each axle mounting frame 7, 8. Present on said transmission element 17, 18 are three pivots 17a, 17b, 17c and 18a, 18b, 18c, respectively, which are arranged in V-shaped orientation with respect to each other. The respective transmission elements 17, 18 are pivotally connected to the associated turntable 9, 10, and that to the rotatable disc 9b, 10b thereof, by pivots 17b and 18b, respectively, which are present at the point of the V-shape. Reaction rods 19 and 20 are fitted between the respective pivots 17a, 18a on the one hand and sliding frames 11, 12 on the other hand. The reaction rods 19, 20 are pivotally connected to the associated transmission element 17, 18 about pivots 17a, 18a on one side and to the sliding frame 11, 12 about pivots 21a, 22a on the other side. The transmission elements are interconnected at the location of pivots 17c, 18c via steering rod 23, which is built up of two outer members 23a, 23b and a central tubular member 23c, which are rigidly interconnected. In the illustrated position, steering rod 23 is oriented perpendicularly to the connecting lines between axis 24 and pivot 17c and between axis 25 and pivot 18c. Rotation of one of the two axle mounting frames 7, 8 about the associated axis 24, 25 is converted into rotation of the other axle mounting frame 7, 8 by means of steering rod 23.

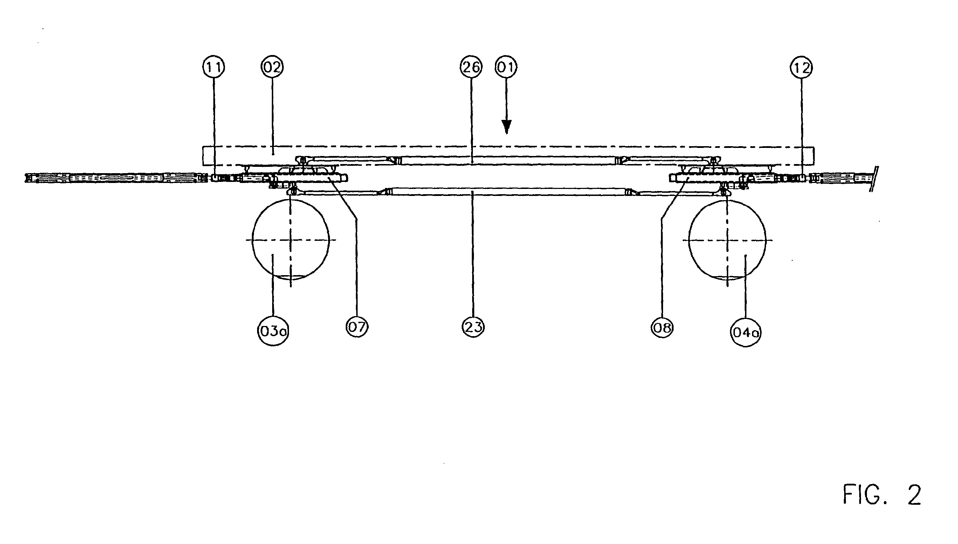

The two sliding frames 11, 12 are interconnected by means of compensating rod 26, which, as appears from Fig. 2, extends above steering rod 23, and which pivotally engages the cross beams 11d, 12d, respectively, of the sliding frames 11, 12 at its ends about pivots 27, 28. Like steering rod 23, compensating rod 26 is built up of two outer members 26a, 26b and a central tubular member 26c, which are rigidly interconnected. In the neutral position of the axle mounting frames 7, 8 as shown in Figs. 1 and 3, the pivots 27, 28 are located on the connecting line between axes 24 and 25.

Arched tongue segments 29, 30 are mounted on the outer side of each sliding frame 11, 12, which segments are pivotable, via pivots 31a, 31b and 32a, 32b, respectively, about an axis which extends parallel to axle parts 5a, 5b and 6a, 6b, respectively. The arched tongue segments 29, 30 are centrally provided with U-shaped recesses 33, 34 at the outer side. A tongue 35 is provided for coupling vehicle 1 to a neighbouring vehicle 1', which tongue is connected to said vehicles via pivots 36, 36', which allow pivoting movement of tongue 35 with respect to the sliding frames 11 and 12' being interconnected by means of the tongue 35 both about a vertical axis and about an axis parallel to axle parts 5a, 5b and 6a', 6b', respectively. A sliding member 37 provided with U-shaped protrusions 38 is movably provided along tongue 35. The sliding member 37 is moved by means of a suitable, for example hydraulic or pneumatic actuator 39. Protrusion 38 can engage in a recess 33, 34, depending on the direction of movement of sliding member 37, as a result of which a triangle construction is formed, whose pivots 31a, 31b and 36' or 32a', 32b' and 36 form the angular points. Thus a possibility of so-called turntable steering of vehicle 1 is created, in which pivot 36' is the coupling point to the tractive vehicle.

In an alternative embodiment, the arched tongue segments 29 and 30 can also be directly connected to axle mounting frames 7 and 8. As a result, compensating rod 26 will only be subjected to steering forces and not to forces that are generated by the forward movement of any trailing vehicles.

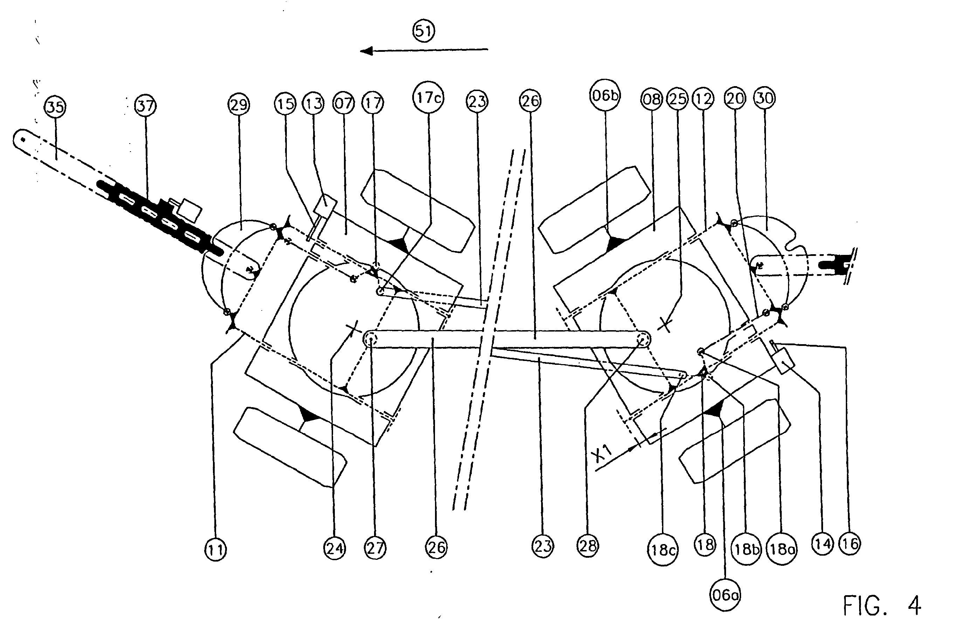

The operation of the vehicle 1, and in particular the operation of the steering mechanism, will now be explained in more detail with reference to Figs. 4 - 7.

Fig. 4 shows a first phase of the vehicle taking a turn to the right while moving forward in the direction indicated by arrow 51. A distinction must be made between a steering axle mounting frame 7, 8 and a steered axle mounting frame 7, 8. The front axle mounting frame, that is, axle mounting frame 7 in Fig. 4, has a steering function, whilst the rear axle mounting frame, axle mounting frame 8 in Fig. 4, is being steered. This fact determines the correct position of sliding member 37, which engagingly co-operates with the tongue segment 29 of axle mounting frame 7 for the illustrated direction of movement 51.

In the illustrated situation, pivoting movement of tongue 35, for example caused by lateral movement of a leading vehicle, results in rotation of axle mounting frame 7 about axis 24. Due to the presence of steering rod 23, said rotation of the axle mounting frame 7 will effect a rotation of the axle mounting frame 8 about axis 25 in the opposite direction. Axle mounting frame 7 has a steering function in the illustrated situation, whilst axle mounting frame 8 is being steered. In such a situation, either an autonomous steering system (not shown) or the driver of the vehicle or of a train of such vehicles must make sure that pin 15 of locking mechanism 13 is in the extended position, so that sliding frame 11 cannot move with respect to axle mounting frame 7. Pin 16 of locking mechanism 14, on the other hand, must at the same time be in the telescoped position, so that said pin 16 will not prevent movement of sliding frame 12 along the steered axle mounting frame 8. Axle mounting frame 7 and the associated sliding frame 11 and transmission element 17 will remain rigidly interconnected as a result of the locking engagement by locking mechanism 13. Since the positions of sliding member 37 or of actuator 39 and of locking mechanisms 13 and 14 are only used in two combinations during forward movement, a common operating mechanism can be used, for example a hydraulic, pneumatic or mechanical operating mechanism, in which the direction of movement determines the correct combination. The driver only needs to perform one operation in order to activate the right switching combination for all vehicles at a time, without any options being available to him. Present on one side of the vehicle or the train of vehicles is the switching activator for a first direction of movement, whilst the switching activator for the second direction of movement opposed to the first direction of movement of the vehicle or the train of vehicles is present on the other side of the vehicle or the trains of vehicles. Alternatively, it is possible to provide an operating arrangement which registers the direction of rotation of the wheels and sets the correct combination in dependence thereon.

As a consequence of the rotation of axle mounting frame 7, the steered axle mounting frame 8 will rotate in anti-clockwise direction about axis 25 as a result of the connection between the two transmission elements 17, 18, and thus between the two axle mounting frames 7, 8, via steering rod 23. The extent to which this happens depends, among other things, on the proportion between the distance between axis 4 and pivot 17c on the one hand and the distance between axis 25 and pivot 18c on the other hand. The latter distance is not a constant, however, due to the action of the sliding frame 12. Said sliding frame 12 moves towards the steering axle mounting frame 7, in a direction perpendicularly to axle parts 6a, 6b with respect to the steered axle mounting frame 8, because compensating rod 26 pulls along the sliding frame 12, as it were, on account of the rotation of pivot 27 about axis 24. In the situation as shown in Fig. 4, sliding frame 12 has moved a distance x1 with respect to axle mounting frame 8. As a result of said movement, transmission element 18 will pivot in anti-clockwise direction about pivot 18b as a result of the operation of reaction rod 20, as a result of which the distance between axis 25 and pivot 18c will increase, as a result of which the steering characteristic or the transmission ratio between the steering axle mounting frame 7 and the steered axle mounting frame 8 is influenced in such a manner that the steered axle mounting frame 8 will rotate less about axis 25 in comparison with the hypothetical situation of sliding frame 12 not being operative.

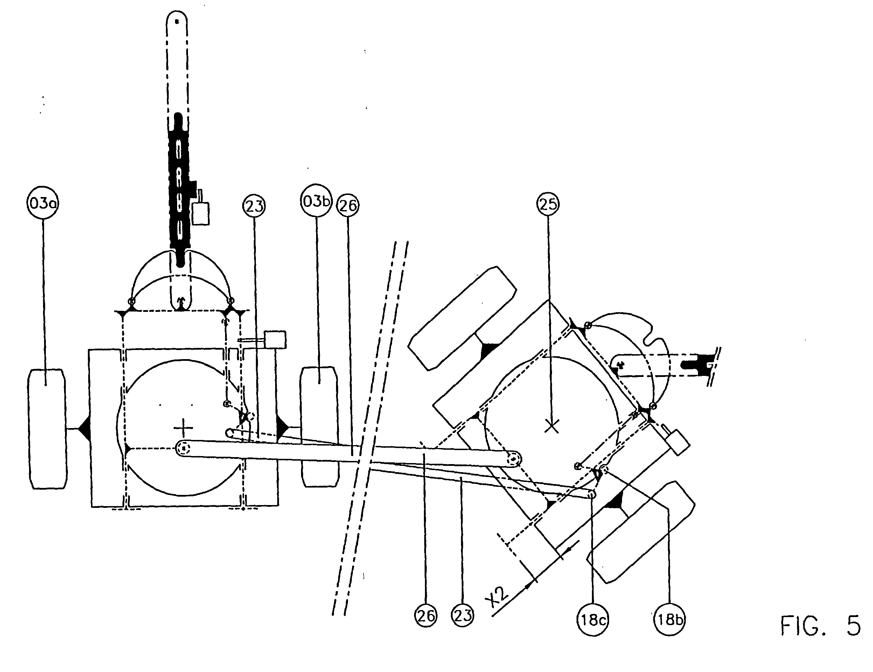

Fig. 5 shows the vehicle 1 in the situation in which the steering axle mounting frame 7 has been rotated through an angle of 90° about axis 24 with respect to chassis 2. As a result of the operation of the above-described mechanism, the movement of sliding frame 12 has further increased to a distance x2, as a result of which also the pivoting movement of transmission element 18 about pivot 18b has further increased, as has the distance between axis 25 and pivot 18c. While a rotation of the steering axle mounting frame 7 of about 30° leads to an angular position of the steered axle mounting frame 8 of about 30° in Fig. 4, it appears that further rotation of axle mounting frame 7 to an angle of displacement of 90° hardly leads to additional rotation of the steered axle mounting frame 8.

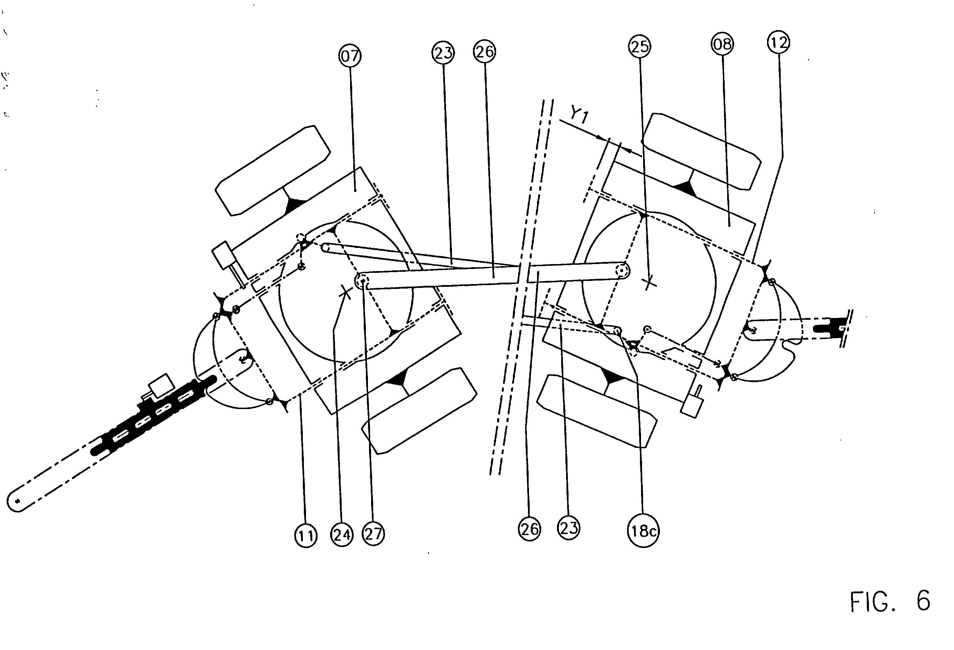

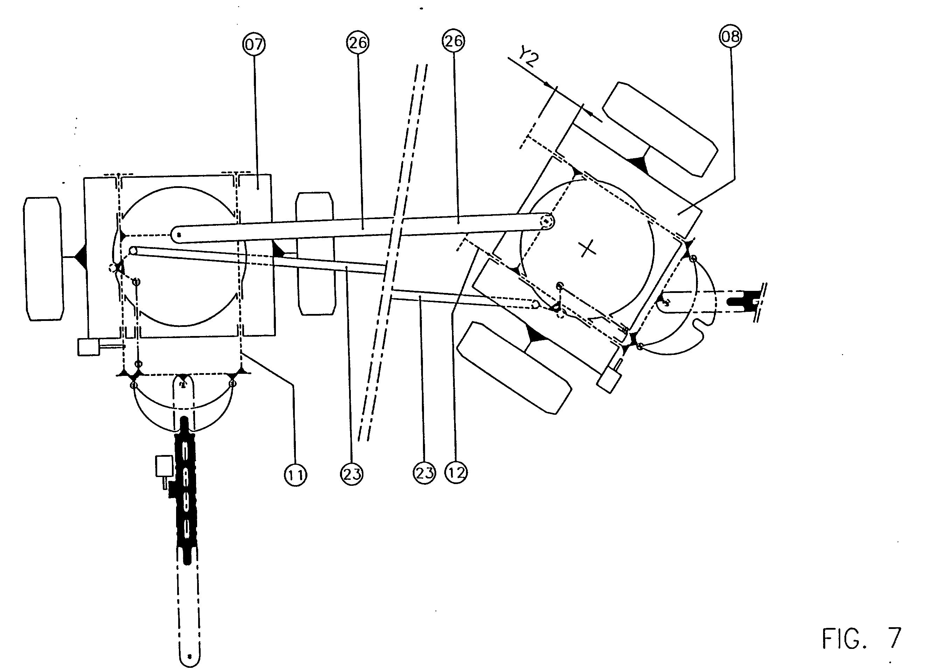

Figs. 6 and 7 show the angular positions of the steering axle mounting frame 7 and the steered axle mounting frame 8 at an angle of displacement of, respectively, about 30° and 90° of the axle mounting frame 7. In principle, the operation of the steering mechanism in the case of a turn to the left does not differ from that in the case of a turn to the right as set forth above with reference to Figs. 4 and 5. On the one hand, steering rod 23 will pull pivot 18c towards itself as a result of the rotation of the steering axle mounting frame 7 about axis 24, as a result of which the steered axle mounting frame 8 will rotate in clockwise direction about axis 25. On the other hand, compensating rod 26 will cause the sliding frame 12 to move in the direction of axle mounting frame 7, over a distance y1 in Fig. 6 and a distance y2 in Fig. 7, precisely as in the case of a turn to the right, as a result of its eccentric engagement around axis 24 at pivot 27. Said movements y1 and y2 cause the distance between pivot 18c and axis 25 to increase as the angular displacement of axle mounting frame 7 increases. Precisely as is the case with the turn to the right, the angle through which the steered axle mounting frame 8 rotates is the same as that of the axle mounting frame 7 up to an angle of displacement of the axle mounting frame 7 of 40°, which means a transmission ration of approximately 1 : 1, whilst the angle through which the steered axle mounting frame 8 rotates will not increase any further, or will even decrease slightly, upon further rotation of the steering axle mounting frame 7 from an angle of 40° to an angle of 90°.

In this way, two parts of the steering range are distinguished both in the case of a left-hand turn and in the case of a right-hand turn, wherein the transmission ratio is approximately 1 : 1 in a first part ranging between about 0° and 40°, whilst the angle of displacement of the steered axle mounting frame 8 will hardly change when the angle of displacement of the steering axle mounting frame 7 ranges between 40° and 90°.

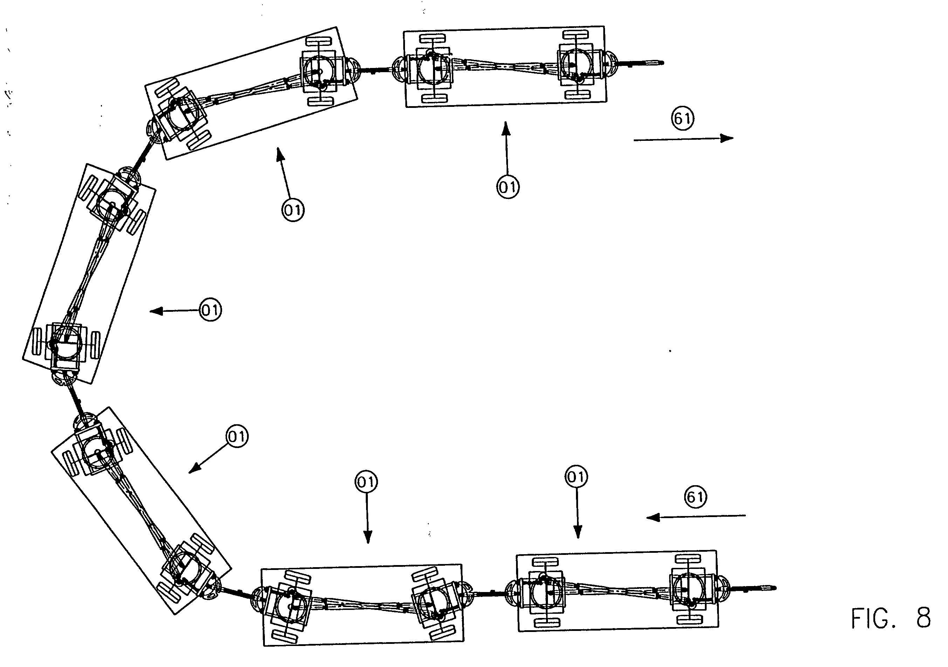

Fig. 8 shows a number of coupled-together vehicles as described above, which vehicles are taking a right-hand turn while travelling in the direction of movement 61. The connection between the vehicles 1, and in particular the position of the sliding member 37 and of the locking mechanisms associated with the respective vehicles 1, is such that the front axle mounting frame, seen in the direction of movement, has a steering function, whilst the rear axle mounting frame is being steered. The forward movement of a vehicle in front causes the steered axle mounting frames of trailing vehicles to rotate in a direction which deviates from the longitudinal direction of the trailing vehicle in question. Since the angle of displacement of the steering axle mounting frame will not exceed 40° during normal operation and normal movement, the angle of displacement of the steering axle mounting farmhand that of the steered axle mounting frame will be approximately the same, with this understanding that said angles will be of opposite sense. As a result of this characteristic, the coupled vehicles 1 will keep following each other's track.

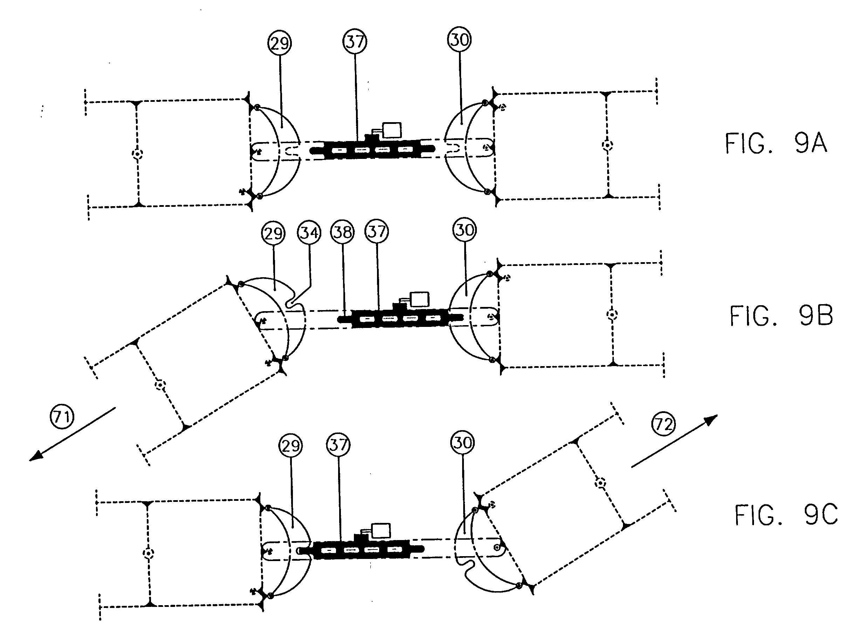

Figs. 9A - 9C show the various positions of sliding member 37 between two successive vehicles 1 in more detail. In Fig. 9A, the sliding member 37 occupies a neutral position, that is, the sliding member 37 does not engage in either of the two tongue segments 29, 30. If a train of vehicles 1 is to be moved in the direction 71 according to Fig. 9B, the sliding member 37 will be moved in a direction opposed to the direction 71, so that sliding member 37 is rigidly connected to the tongue segment 30, at least in the horizontal plane, whereby it is also determined that the axle mounting frame that is present on the side of tongue segment 30 can function as the steering axle mounting frame. To this end, the locking mechanism associated with the axle mounting frame in question must be put in the operative position by extending the associated telescopic pin that engages in an opening (not shown) in the sliding member in question. If said opening and said pin should not be aligned yet, the sliding member will be pulled to an extreme position at the start of the movement in the direction 71 of the train of vehicles 1, as a result of which the opening and the pin will be aligned and locking can take place.

If it is subsequently desired to reverse the direction of movement to the direction 72 of Fig. 9C, the sliding member 37 will be moved in a direction opposed to the direction 72, so that it will come into engagement with tongue segment 29. If successive vehicles are not oriented in the same direction, the U-shaped protrusion 38 cannot engage directly in the U-shaped recess 34. As soon as the train of vehicles is moved in direction 72, however, and the successive vehicles in question take up the same orientation, the U-shaped protrusion 38, once it scrapes along the outer surface of tongue segment 29, will lock itself in position in said recess 34. At the same time, the locking mechanism associated with the axle mounting frame that first functioned as the steering axle mounting frame will be deactivated, whilst the locking mechanism of the other axle mounting frame, which now functions as the steering axle mounting frame, will be activated.

The symmetric embodiments of the two axle mounting frames and of the associated parts thus make it possible in a simple manner to reverse the direction of movement of a train of vehicles according to the invention, with the vehicles keeping in each other's track.

## Claims

1. A vehicle comprising a chassis fitted with a first pair of wheels and a second pair of wheels, which are rotatably journalled in, respectively, a first wheel pair frame and a second wheel pair frame, which are each rotatably connected to the chassis on two opposed sides of the chassis about a first vertical axis and a second vertical axis, respectively, and which are interconnected by a transmission for transmitting a rotation of the first wheel pair frame to the second wheel pair frame according to a first transmission ratio, **characterized in that** the second wheel pair frame includes a second sliding member, which is movable with respect to the second wheel pair frame in dependence on the rotation of the first wheel pair frame, which movement influences the first transmission ratio.

2. A vehicle according to claim 1, **characterized in that** the transmission comprises a steering rod whose respective ends act on the first wheel pair frame and the second wheel pair frame, respectively, at a first radial distance from the first vertical axis and at a second radial distance from the second vertical axis, wherein movement of the second sliding member effects a change in first radial distance and/or said second radial distance.

3. A vehicle according to claim 1 or 2, **characterized in that** a transmission arm is provided, which transmission arm is pivotally connected to the second wheel pair frame about a vertical transmission axis and which is coupled to the second sliding member and to the steering rod.

4. A vehicle according to claim 1, 2 or 3, **characterized in that** a coupling is provided between the first wheel pair frame and the second sliding member, which coupling acts on the first wheel pair frame at a first coupling distance from the first vertical axis.

5. A vehicle according to claim 4, **characterized in that** said coupling acts on the second wheel pair frame at a second coupling distance from the second vertical axis.

6. A vehicle according to any one of the preceding claims, **characterized in that** said transmission is also arranged for transmitting rotation of the second wheel pair frame to the first wheel pair frame according to a second transmission ratio, and **in that** the first wheel pair frame includes a first sliding member, which is movable with respect to the first wheel pair frame in dependence on rotation of the second wheel pair frame, which movement of the first sliding frame influences the second transmission ratio.

7. A vehicle according to claim 6, **characterized in that** locking means are provided for effecting a rigid connection between the first wheel pair frame and the first sliding member or between the second wheel pair frame and the second sliding member.

8. A vehicle according to any one of the preceding claims, **characterized in that** a first coupling element, which is rigidly connected to the first wheel pair frame, at least in the horizontal plane, and a connecting element being connected to the first wheel pair frame are provided for connecting the vehicle to another vehicle by also connecting the connecting element to a second wheel pair frame including a second coupling element of the other vehicle, and **in that** coupling means are provided for rigidly connecting, at least in the horizontal plane, to the first coupling element or the second coupling element.

9. A vehicle according to claim 8, **characterized in that** said coupling means on the one hand and said first coupling element or said second coupling element on the other hand form a form-locked connection in the case of coupling co-operation.

10. A vehicle according to claim 8 or 9, **characterized in that** said first coupling element and said second coupling element are provided with a recess for coupling co-operation with a protrusion of said coupling means.

11. A vehicle according to claim 10, **characterized in that** said coupling means are movable between a first extreme position for coupling co-operation with the first wheel pair frame of the vehicle and uncoupling from the second wheel pair frame of the other vehicle, and a second extreme position for uncoupling from the first wheel pair frame of the vehicle and coupling co-operation with the second wheel pair frame of the other vehicle.
